# EUROPÄISCHE PATENTSCHRIFT

(11) **EP 1 259 438 B1**
(45) Veröffentlichungstag und Bekanntmachung des Hinweises auf die Patenterteilung: **10.05.2006**
(21) Anmeldenummer: 01917041.4
(22) Anmeldetag: 28.02.2001
(51) Int. Cl.: B65D 75/58, A61C 19/02

(54) **VORRICHTUNG ZUM LAGERN UND AUSBRINGEN EINER FLIESSFÄHIGEN SUBSTANZ**
DEVICE FOR STORING AND DISPENSING A FREE-FLOWING SUBSTANCE
DISPOSITIF POUR STOCKER ET DELIVRER UNE SUBSTANCE COULANTE

(30) Priorität: 01.03.2000 DE 10009627
(43) Veröffentlichungstag der Anmeldung: 27.11.2002
(73) Patentinhaber: 3M ESPE AG, 82229 Seefeld (DE)
(72) Erfinder: BERTL, Mathias, 82409 Wildsteig (DE); PEUKER, Marc, 86938 Schondorf (DE); HAGER, Gabriele, 86157 Augsburg (DE)
(86) Internationale Anmeldenummer: PCT/EP2001/002242
(87) Internationale Veröffentlichungsnummer: WO 2001/064544

(56) Entgegenhaltungen:
- EP-A- 0 895 943
- US-A- 3 933 245
- US-A- 4 168 002

## Beschreibung

Die Erfindung betrifft eine Vorrichtung, insbesondere zum Lagern und Ausbringen von Dentalmaterialien, umfassend einen Behälter mit einer ersten und einer zweiten Folie, die mindestens eine erste Kammer zur Aufnahme einer ersten Substanz bilden. Die Vorrichtung weist ferner eine von der Kammer getrennte Tasche zur Entnahme der ersten Substanz auf, wobei die Trennung zwischen der Tasche und der ersten Kammer einen selektiv zu öffnenden Durchgangsbereich besitzt, und wobei die erste Kammer mindestens ein weiteres Behältnis enthält.

Insbesondere im Dentalbereich ist es oftmals erforderlich, eine Vielzahl von Handgriffen nacheinander abgestimmt auszuführen.

Zum Füllen einer Cavität eines Zahnes mit beispielsweise einer Kunststofffüllung ist üblicherweise zunächst ein Primer und im Anschluss daran ein Bonding auf die Zahnhartsubstanz aufzutragen, ggf. zu verblasen, dann ggf. zu belichten, bevor im Anschluss daran die eigentliche Füllung gelegt werden kann.

Während die adhäsiv wirkenden Substanzen Primer und Bonding üblicherweise als Flüssigkeit abgepackt in Flaschen vorliegen, befindet sich das Füllungsmaterial als hochviskoses Material in Schraubtuben oder wird aus sogenannten Compules ausgepresst.

Der eine Füllung legende Zahnarzt hat somit zunächst Primer und Bonding aus der einen Verpackung in Form einer Flüssigkeit und im Anschluss daran, das Füllungsmaterial in Form einer hochviskosen Masse aus einer hiervon verschiedenen Verpackung zu entnehmen.

Der zeitliche Aufwand hierzu ist nicht unerheblich. Hinzu kommt, dass Primer und Bonding des einen Herstellers oftmals nicht auf die chemische Zusammensetzung des Füllungsmaterials eines anderen Herstellers abgestimmt sind, was zu verminderten Haftwerten am Zahn führen kann. Auch beim Öffnen, Ausbringen und der Anwendungsreihenfolge der Substanzen aus den unterschiedlichen Verpackungen sind Bedienungsfehler nicht ausgeschlossen.

Das Lagern und Auftragen von geringen Flüssigkeitsmengen kann beispielsweise in Behältnissen in Form von "Blisterpackungen" erfolgen. In dem von einer abziehbaren Folie verschlossenen tiefgezogenen Teil der Packung sind diesbezüglich zwei voneinander getrennte Vertiefungen ausgebildet. Die erste Vertiefung kann eine geringe Flüssigkeitsmenge enthalten, in die andere Vertiefung kann ein Pinsel eingelegt sein.

In WO-96/03326 ist beispielsweise ein Behältnis zum Einmalgebrauch beschrieben, das Mulden zur Aufbewahrung eines Medikaments und eines Applikators aufweist. Beide Mulden sind durch eine peelbare Deckfolie vor Kontamination geschützt. In einer Ausführungsform wird das Medikament durch Drücken auf die das Medikament enthaltende Mulde in die den Applikator enthaltende Mulde überführt, um den Applikator zu benetzen. Es wird ausgeführt, dass dies nur dann möglich ist, wenn die Deckfolie im Übergangsbereich der beiden Mulden mit dem Behältnis nicht verklebt ist. Eine derartige Verpackung eignet sich nicht zum Lagern von ätzenden Flüssigkeiten.

In US-A-3,835,834 wird ein Pflegeset offenbart, das zwei Mulden in einem Grundkörper aufweist, die zum einen eine Pflegesubstanz und zum anderen einen Tupfer enthalten. Durch eine Siegelfolie ist der die Pflegesubstanz und den Tupfer enthaltende Grundkörper vor Verschmutzung geschützt.

Aus EP-A-0 895 943 ist eine Vorrichtung zum Lagern und Auftragen einer fließfähigen Substanz bekannt, mit einem Behälter aus zwei Folien, die unter Bildung einer Kammer zur Aufnahme der Substanz und einer von der Kammer getrennten Tasche zur Entnahme der Substanz miteinander verbunden sind, wobei die Trennung zwischen der Kammer und der Tasche einen selektiv zu öffnenden Durchgangsbereich aufweist.

Üblicherweise verwendete peelbare Siegelfolien sind gegenüber aggressiven Medien wie beispielsweise starken Säuren und dipolar aprotischen Lösungsmitteln, wie Aceton nicht dauerhaft beständig. Durch Reaktion dieser Medien mit Folienbestandteilen kann es zur Delamination einzelner Folienschichten kommen. Damit ist die Lagerstabilität des Füllgutes und eine sichere Applikation nicht mehr gewährleistet.

Folglich ist es eine Aufgabe der vorliegenden Erfindung, eine Vorrichtung bereitzustellen, die diese Nachteile vermeidet.

Eine weitere Aufgabe kann darin gesehen werden, eine Vorrichtung bereitzustellen, die es ermöglicht, unterschiedliche Substanzklassen innerhalb einer Verpackung zu lagern und geordnet, insbesondere als Mischung auszubringen.

Insbesondere besteht Bedarf für eine Vorrichtung, die es erlaubt einzelne Komponenten einer adhäsiv wirkenden Mischung getrennt und sicher in einer Verpackung zu lagern und dort auf einfache Weise mischen zu können.

Diese Aufgabe wird durch eine Vorrichtung und ein Verfahren zur Anwendung der Vorrichtung gelöst, wie es in den Ansprüchen beschrieben ist.

Mit den Begriffen "umfassen" oder "enthalten" im Sinne der Erfindung wird eine nicht abschließende Aufzählung von Merkmalen eingeleitet. Der Begriff "ein" ist als unbestimmte Mengenangabe im Sinne "mindestens ein" aufzufassen.

Die Erfindung weist dabei folgende Vorteile auf:

Das Vorhandensein eines separaten Behältnisses zur Aufnahme einer Substanz verhindert, dass die Substanz im Lagerzustand unmittelbar weder mit dem selektiv zu öffnenden Durchgangsbereich, noch mit der die Kammer bildenden Folien in Kontakt kommt.

Dadurch wird eine Beschädigung der Vorrichtung, insbesondere der die Vorrichtung bildenden Folien erschwert. Dies ermöglicht eine Verlängerung der Lagerzeit der die Substanz enthaltenden Vorrichtung.

Hierbei hat sich die Verwendung von die Diffusion flüchtiger Substanzen stark beeinträchtigenden oder verhindernden Materialien zur Herstellung des Behältnisses als vorteilhaft erwiesen.

Abhängig vom Material für das Behältnis lassen sich auf diese Weise auch aggressive Substanzen problemlos lagern und handhaben, ohne auf vorteilhafte Eigenschaften von üblicherweise verwendeten Folien, die den Behälter bilden, verzichten zu müssen.

Der Begriff aggressive Substanzen umfasst sowohl ätzende (beispielsweise saure und basische Substanzen) als auch klebrige Substanzen, sowie Lösungsmittel mit kunststoffanlösenden Eigenschaften.

Durch die erfindungsgemäße Vorrichtung ist auch eine sichere Lagerung von insbesondere strahlungsempfindlichen Substanzen möglich. Äußere Strahlung muss nun nach der den Behälter bildenden Folie eine zusätzliche Barriere überwinden, bevor die Strahlung auf die Substanz treffen kann. Unter Strahlung ist jegliche Form natürlicher vorkommender als auch künstlich erzeugter Strahlung zu verstehen. Hierunter fällt zum einen elektromagnetische Strahlung, insbesondere im Bereich von 380 bis 520 nm und zum anderen Korpuskelstrahlung, insbesondere Betastrahlung.

Die erfindungsgemäße Vorrichtung ermöglicht ferner ein problemloses Öffnen der Kammer durch Lösen der Sollbruchstelle. Die gegebenenfalls in der Kammer vorhandene Substanz lässt sich dann in die Tasche zur Entnahme überführen. Gleichzeitig kann die erfindungsgemäße Vorrichtung als Dosiergerät zum Ausbringen und Auftragen von durch das Kammervolumen vorgegebenen Mengen der Substanz dienen.

Die Vorrichtung zeichnet sich somit insbesondere dadurch aus, dass eine sich in einem Behältnis befindliche erste Substanz durch Ausübung von Druck in eine Kammer zumindest teilweise überführen lässt und von dort über einen selektiv zu öffnenden Durchgangsbereich in eine Art Auffangschale überführen lässt. Je nach Ausführungsform kann vor dem Ausbringen bzw. Überführen der ersten Substanz in die Auffangschale die erste Substanz mit einer zweiten Substanz gemischt werden.

Das sich in der Kammer befindliche Behältnis ist vorzugsweise in der Kammer lose angeordnet bzw. eingelegt, insbesondere nicht festgeklebt.

Gegebenenfalls weist die Vorrichtung mehrere miteinander durch selektiv zu öffnende Durchgangsbereiche verbindbare Kammern auf, die sich zur Aufnahme von Substanzen eignen.

Gegebenenfalls weist die Vorrichtung ferner einen peelbaren Außenschichtbereich auf. Dies ermöglicht ein einfaches zumindest partielles Abziehen eines Folienteils.

Dadurch wird zumindest eine Kammer sichtbar, die eine oder mehrere Substanzen enthält, die sich gegebenenfalls in separaten Behältnissen befinden.

Die Verwendung unterschiedlich beschaffener Folien für den Außenschichtbereich einerseits und die die Kammer bildenden Folien andererseits erlaubt eine vor Ingebrauchnahme der Vorrichtung sichere Lagerung der Substanzen.

Darüber hinaus bleiben die zu mischenden Substanzen im Lagerzustand vor äußeren Einflüssen, wie Lichteinfall oder auch ungewollter Druckbelastung besser geschützt.

Ist eine der die Kammer bildenden Folien durchscheinend, kann nach Abziehen des peelbaren Außenschichtbereichs der Mischvorgang und/oder das Entleeren der Kammer beispielsweise optisch verfolgt werden. Dadurch ist ein homogeneres Mischungsergebnis und ein vollständigeres Entleeren der Kammer in die Tasche erreichbar.

Je nach zu applizierender Substanz kann die Innenschicht der Folie, die mit der zu applizierenden Substanz in Kontakt kommt, an die Eigenschaften der Substanz angepasst werden. Dies ermöglicht die Verwendung der Vorrichtung zur Lagerung für eine Vielzahl von in ihrer Reaktivität unterschiedlichen Substanzen, ohne dass das Verfahren zur Herstellung der Vorrichtung insgesamt umgestellt werden muss.

Diese Ausführungsform ermöglicht somit eine sichere und kontaminationsgeschützte Lagerung und Ausbringung von beispielsweise Dentalmaterial.

Gegebenenfalls ist auf einem zweiten Abschnitt eine weitere, mit der ersten oder gegebenenfalls vorhandenen zweiten Kammer nicht über einen selektiv zu öffnenden Durchgangsbereich verbindbare Kammer vorhanden. Diese weitere Kammer ist vorzugsweise mit einer separat peelbaren Deckfolie verschlossen, die sich gegebenenfalls wieder verschließen lässt. Dies ermöglicht eine Lagerung von mindestens einer weiteren Substanz, die in der Verarbeitungsreihenfolge nach Applikation der ersten Substanz üblicherweise verwendet wird.

Der zweite Abschnitt der Vorrichtung gemäß dieser Ausführungsform kann mit dem ersten Abschnitt auf irgendeine Art verbunden sein, wobei sichergestellt sein sollte, dass beim Ausbringen der Substanz aus der ersten Kammer des ersten Abschnitts diese nicht in die Kammer des zweiten Abschnitts gelangen kann. Folglich sind die Kammern des ersten Abschnitts mit der oder den Kammern des zweiten Abschnitts nicht durch einen zu öffnenden Durchgangsbereich verbindbar. Zur einfacheren Handhabung der Vorrichtung ist der zweite Abschnitt vorzugsweise vom ersten Abschnitt abtrennbar ausgebildet. Eine Ausbildung des Verbindungsstücks, der ein Abtrennen durch händisches Abreißen ermöglicht hat ist besonders günstig. Dies kann beispielsweise durch Perforierung des Verbindungsstücks erreicht werden. Denkbar und möglich ist aber auch jede andere Gestaltung des Verbindungsstücks zwischen den beiden Abschnitten, beispielsweise durch Verkleben mit einer weiteren Folie.

Da die in der weiteren Kammer des gegebenenfalls vorhandenen zweiten Abschnitts befindliche Substanz üblicherweise an die Beschaffenheit der Substanz in der anderen Kammer angepasst ist, vermindert dies die Gefahr der Verwendung von mit der ersten Substanz nicht kompatiblen Substanzen.

Die Vorrichtung gemäß dieser Ausführungsform zeichnet sich folglich dadurch aus, dass problematisch zu lagernde Substanzen bzw. Komponenten einer herzustellenden Mischung innerhalb einer Verpackung, insbesondere zur Einmalverwendung, zum Ausbringen bzw. Mischen hergerichtet vorliegen. Insbesondere können beispielsweise drei Komponenten in der Vorrichtung getrennt gelagert werden: im ersten Abschnitt der Vorrichtung zwei Komponenten, die zum Bereiten einer Adhäsiv-Mischung erforderlich sind und im zweiten Abschnitt die dritte Komponente in Form eines Füllungsmaterials, welches in seiner chemischen Zusammensetzung auf die Adhäsiv-Mischung abgestimmt ist.

Die Vorrichtung eignet sich je nach Ausführungsform somit nicht nur zum getrennten Lagern von mehreren Komponenten, sondern auch zum Mischen eines Teils der Komponenten, sowie zum koordinierten Ausbringen der gemischten Komponenten und einer darauf abgestimmten weiteren Komponente, die in ihren rheologischen Eigenschaften üblicherweise von den beiden anderen Komponenten verschieden ist.

Weiterhin ist sichergestellt, dass alle in der Vorrichtung gelagerten Substanzen das gleiche Abfülldatum aufweisen, sodass Inkompatibilitäten der Substanzen aufgrund unterschiedlicher Verfallzeiten ausgeschlossen werden können.

Somit ist die Vorrichtung gemäß dieser Ausführungsform insgesamt einfach in der Handhabung, da sich die erste Substanz, die sich in der ersten Kammer befindet, ohne Komplikationen und aufwendiges Öffnen der Vorrichtung zunächst in die Tasche zur Entnahme überführen lässt. Nach Applikation der Substanz aus der Tasche ist in der gleichen Vorrichtung eine zweite Substanz gelagert und zur Applikation hergerichtet. Die zweite Substanz, die sich üblicherweise in ihrer Konsistenz von der ersten Substanz unterscheidet, ist in einer Kammer gelagert, die auf eine andere Weise zu öffnen ist als die erste Kammer.

Während sich die Substanz, die sich in der ersten Kammer befindet durch Ausübung von Druck auf die Vorrichtung ohne Abziehen einer Deckschicht ausbringen lässt, ist zur Entnahme der zweiten Substanz aus der Kammer, die sich im zweiten Abschnitt befindet, üblicherweise eine Deckfolie manuell abzuziehen.

Die Vorrichtung zeichnet sich somit in dieser Ausführungsform dadurch aus, dass sie über zwei Abschnitte mit mindestens je einer Kammer zur Aufnahme je einer Substanz verfügt, die ihrerseits auf unterschiedliche Weise aus der Vorrichtung zu entnehmen sind, wobei die einzelnen Kammern auf unterschiedliche Weise geöffnet werden.

Der zweite Abschnitt der Vorrichtung gemäß dieser Ausführungsform umfasst üblicherweise ebenfalls zwei Folien, üblicherweise eine erste Folie in Form einer Deckfolie und eine zweite Folie in Form einer Tiefziehfolie. Erste und zweite Folie bilden eine Kammer zur Aufnahme einer Substanz. Die Kammer lässt sich insbesondere durch Abziehen der Deckfolie öffnen. Zu diesem Zweck ist die erste Folie vorzugsweise peelbar auf die zweite Folie gesiegelt.

Die Vorrichtung umfasst somit zwei Abschnitte mit Kammern, die jeweils von zwei Folien gebildet werden, wobei die Folien je nach Ausführungsform auf unterschiedliche Weise miteinander verbunden bzw. versiegelt sind.

Die erste und zweite Folie sind gegebenenfalls Mehrschichtfolien. Sie weisen einen gegebenenfalls peelbaren Außenschichtbereich und einen Innenschichtbereich auf.

Als Folien werden vorzugsweise solche verwendet, die eine ausreichende Diffusionsdichtigkeit aufweisen.

Je nach Beschaffenheit der zu lagernden Substanz sollten die Folien auch beständig gegen aggressive, beispielsweise ätzende und/oder Lösungsmitteleigenschaften aufweisende Stoffe sein.

Die Folienbestandteile können gewählt sein aus Kunststoff-, Metall- und keramischen Folien.

Als Kunststofffolien sind beispielsweise denkbar: PE, PP, PTFE, PET, PA, PBT, PVC, EVA, PVF (Polyvinylfluorid).
Als Metallfolien sind beispielsweise denkbar: Al, Sn, Au, Ag, Fe.

Unter keramischen Folien sind Folien zu verstehen, die beispielsweise eine SiOxhaltige Schicht aufweisen.

Der Folienaufbau ist grundsätzlich beliebig und orientiert sich an der Beschaffenheit der zu lagernden Substanzen.

Als vorteilhaft hat sich ein Folienaufbau mit der Abfolge von außen nach innen PET, Al, PET, PE oder PP, Al, PET, PE, gegebenenfalls auch ohne PET-Folie als Mittelfolie, erwiesen.

Zwischen den Folien können sich ferner adhäsive Zusätze befinden.

Als adhäsive Zusätze sind denkbar: Kaschierkleber oder Extrusionskaschiermedien.

Der gegebenenfalls vorhandene peelbare Außenschichtbereich der ersten Folie ist vorzugsweise lichtundurchlässig.

Der Innenschichtbereich der ersten Folie ist vorzugsweise lichtdurchlässig und gegebenenfalls flexibler als der Außenschichtbereich.

Als vorteilhaft für den Außenschichtbereich hat sich die Abfolge von außen nach innen PET, Al oder PP, Al erwiesen.

Die Vorrichtung umfasst einen Behälter, der eine erste Folie, beispielsweise in Form einer Deckfolie und eine zweite Folie, beispielsweise in Form einer Tiefziehfolie, wie sie bei herkömmlichen Blisterverpackungen Verwendung findet, umfasst.

Die Folien sind mit Ausnahme der die Kammern bildenden Bereiche vorzugsweise flächig miteinander verbunden, vorzugsweise in der Form, dass sie bis auf den selektiv zu öffnenden Durchgangsbereich fest miteinander versiegelt sind.

Die Verbindung der ersten mit der zweiten Folie kann beispielsweise durch Heißsiegeln, Kaltsiegeln, Verkleben und/oder Ultraschallschweißen mit Sonotroden, erfolgen.

Die Vorrichtung lässt sich je nach Ausführungsform auch auf eine einfache Weise herstellen. Die peelbar zu öffnenden Bereiche lassen sich in einem Arbeitsschritt erzeugen, insbesondere durch Einwirken des gleichen Energieeintrags, obwohl sich diese Bereiche auf zwei unterschiedlichen Abschnitten der Vorrichtung befinden.

Ein Mehrschichtaufbau der ersten und zweiten Folie kann durch Laminieren, Kalandrieren, Kaschieren verschiedener Monofolienlagen, gegebenenfalls auch durch Bedampfen, beispielsweise mit Metallen, erreicht werden.

Um die in die Vorrichtung eingebrachten, applizierbaren Substanzen beispielsweise vor Lichteinfall zu schützen, sind die Folien vorzugsweise derart gestaltet, dass sie in einem die Kammer umgebenden Bereich durch zwei in Abstand voneinander angeordnete Siegelnähte miteinander verbunden sind.

Das oder die Behältnisse lassen sich mit den gleichen Verfahren herstellen, die zur Herstellung der Vorrichtung angewandt werden können. Das Behältnis wird dabei vorzugsweise durch Verschweißen, Verkleben oder Versiegeln im Randbereich von kunststoff- oder metallhaltigen Folien hergestellt, sodass vorzugsweise ein kissenförmiges Gebilde entsteht. Die Verbindung der Folien erfolgt derart, dass sich das Behältnis durch Einwirkung von äußerem Druck öffnen lässt, wobei das Behältnis bei Druckeinwirkung vorzugsweise ungerichtet aufplatzen soll.

Die Form der Vorrichtung ist grundsätzlich beliebig, vorzugsweise aber an die Beschaffenheit der gelagerten Substanzen angepasst.

Die Kammer oder die Kammern sind vorzugsweise rund (kreisrund oder oval) gegebenenfalls aber auch eckig (quadratisch, rechteckig oder dreieckig) ausgebildet.

Die Kammern weisen ihrem Zweck entsprechend bestimmte Volumen auf, sodass bei vorschriftsmäßiger Anwendung und mehrerer zu vermischender Komponenten eine homogene Durchmischung erfolgen kann. Die der Tasche benachbarte Kammer hat dabei vorzugsweise ein Volumen, das geeignet ist, die gesamte Menge an zu mischender oder gemischter Substanz aufzunehmen.

Eine Kammer weist beispielsweise einen Durchmesser von 5 bis 20 mm auf, das Ausbringinstrument einen Schaftdurchmesser im Bereich von 2 bis 4 mm. Das applizierbare Substanzvolumen liegt üblicherweise im Bereich von wenigen Zehntel Millilitern, bevorzugt im Bereich von 0,03 bis 0,5 ml. Je nach Ausführungsform kann das applizierbare Substanzvolumen aber auch einige Milliliter, insbesondere 5 bis 10 ml betragen.

Das Volumen des Behältnisses liegt üblicherweise im Bereich von 0,01 bis 8 ml, vorzugsweise im Bereich von 0,5 bis 5 ml, besonders bevorzugt im Bereich von 0,01 bis 1,0 ml.

Die Tasche ist nach einer Seite hin offen und gegebenenfalls so ausgebildet, dass sie ein Ausbringinstrument auch im Lagerzustand aufnehmen kann. Die Tasche kann bei entsprechend kleinem Durchmesser der Taschenöffnung nach außen, beispielsweise in Form einer Kanüle, auch selbst als Applikationsvorrichtung dienen.

Die Trennung zwischen der oder den Kammern und der Tasche ist bezüglich des Abstandes sowie bezüglich der Festigkeit der Haftung so gestaltet, dass sie eine Sollbruchstelle bilden können.

Der Durchgangsbereich ist so beschaffen, dass er im Lagerzustand einen dichten Verschluss bildet, sowohl zur Tasche hin als auch zur gegebenenfalls vorhandenen zweiten Kammer.

Eine solche Sollbruchstelle lässt sich beispielsweise durch Kaltsiegeln, Heißsiegeln, Ultraschallschweißen oder Verkleben erreichen, wobei beim Heißsiegeln ein im Vergleich zu den anderen Siegelbereichen unterschiedlicher Energieeintrag, vorzugsweise niedrigerer Energieeintrag erfolgt. Dieser kann über Temperatur, Druck und/oder Haltedauer geregelt werden.

Eine andere Möglichkeit besteht darin, im Bereich der Sollbruchstelle zwischen die erste und die zweite Folie die Haftung herabsetzende Fremdpartikel, wie Peelfolienstanzlinge oder Hotmeltklebepunkte einzubringen. In diesem Fall werden als Ober- und Unterfolie vorzugsweise festversiegelnde Folien eingesetzt.

Das gegebenenfalls vorhandene Applikationsinstrument ist vorzugsweise pinsel- oder tupferartig gestaltet. Ein Applikationsinstrument mit einer kugelförmigen, Bürsten- oder Pinselhaare tragenden Spitze hat sich als günstig erwiesen. Ferner können Pipetten, Wattestäbchen, Schwämme oder Spatel als Applikationsinstrument verwendet werden.

Ferner ist es bei Verwendung eines Applikationsinstrument günstig, wenn die Tasche durch das Applikationsinstrument nach außen abgedichtet wird.
Die Vorrichtung dient vorzugsweise zum Lagern und Ausbringen von Substanzen, insbesondere von geringen Mengen, wie sie beispielsweise im Dentalbereich gehandhabt werden.

Bevorzugt eignet sich die Vorrichtung zum Lagern von aggressiven und/oder lichtempfindlichen Substanzen.

Zum Gebrauch wird zunächst der gegebenenfalls vorhandene Außenschichtbereich zumindest teilweise abgezogen, bis die die zu mischenden Substanzen, die sich gegebenenfalls auch in separaten Behältnissen befinden können, enthaltenden Kammern sichtbar werden.

Ferner sind die beiden Folien im Bereich des selektiv zu öffnenden Durchgangsbereich trennbar ausgestaltet, so dass eine Verbindung zwischen der Kammer und der Tasche hergestellt werden kann.

Ebenfalls ist erforderlich, dass das oder die eine Substanz beinhaltenden vorhandenen Behältnisse geöffnet werden.

Vorzugsweise geschieht dies durch äußeren Druck auf die Kammer, beispielsweise zwischen Daumen und Zeigefinger des Benutzers. Dadurch platzt das oder die die Substanz enthaltenden Behältnisse auf.

Wenn die Vorrichtung eine erste und eine zweite Kammer aufweist, die über einen selektiv zu öffnenden Durchgangsbereich miteinander verbunden werden können, kann durch abwechselndes Drücken auf die Außenschicht der die Substanzen enthaltenden Kammern ein abwechselndes Hin- und Herbewegen der zu mischenden Substanzen durch die geschaffene selektive Öffnung bewirkt werden, bevor die gemischten Substanzen in die der Kammer benachbarten Tasche überführt werden.

Durch Knicken der Vorrichtung im Bereich zwischen den Kammern lässt sich der oder die selektiv zu öffnenden Durchgangsbereiche wieder verschließen. Ein Zurückfließen der gemischten Substanzen in die andere Kammer ist dann nahezu unmöglich, so dass sich die gemischten Substanzen durch Druckeinwirkung auf den Außenbereich der die Kammer bildenden Folien in die Tasche überführen lassen.

Falls der Innenschichtbereich der ersten Folie durchscheinend ausgebildet ist, lässt sich der Mischvorgang und das Entleeren von Kammer zu Kammer bzw. in die Tasche visuell verfolgen.

Ein sich in der Tasche befindendes oder erst zu diesem oder späteren Zeitpunkt eingebrachtes Ausbringinstrument wird benetzt und kann anschließend zur Applizierung der freigesetzten Substanz verwendet werden.

Denkbar ist auch, dass das Ausbringinstrument in Richtung der Kammer bewegt wird, um den selektiv zu öffnenden Durchgangsbereich zu lösen und gegebenenfalls das oder die sich in der Kammer befindlichen Behältnisse zu öffnen. Hierdurch erfolgt ebenfalls eine Benetzung des Ausbringinstruments.

Ist ein wiederholtes Applizieren der freigesetzten Substanz erforderlich, kann das Ausbringinstrument erneut in die Tasche eingeführt werden.

Vorzugsweise ist die Tasche oder das Ausbringinstrument so gestaltet, dass beim erneuten Einführen des Ausbringinstruments in die Tasche eine Benetzung des äußeren Abschnitts des Ausbringinstruments nicht stattfindet.

Dies kann beispielsweise durch eine kanalförmige Ausbildung der Tasche und eine daran angepasste Ausbildung des Ausbringinstruments erfolgen.

Denkbar ist auch eine schalen- oder wannenförmige Gestaltung des Taschenendes der Tiefziehfolie, in das die Substanz zum wiederholten Benetzen des Applikationsinstruments ohne Schaftbenetzung des Applikationsinstrument gefördert wird.

Gegenstand der vorliegenden Erfindung ist somit auch ein Verfahren zur Verwendung der Vorrichtung, welches folgende Schritte umfasst:
a) Bereitstellen einer Vorrichtung, wie sie oberhalb beschrieben ist,
b) Ausüben von Druck auf die erste Kammer des ersten Abschnitts, wodurch das sich in dieser Kammer befindliche Behältnis öffnet,
c) Mischen der aus dem Behältnis austretenden ersten Substanz gemäß Schritt b) mit einer zweiten Substanz, die sich entweder in der erste Kammer außerhalb des Behältnisses oder in einer zweiten Kammer befindet, die über einen selektiv zu öffnenden Durchgangsbereich mit der ersten Kammer verbindbar ist,
d) Überführen der Mischung aus Schritt c) über den selektiv zu öffnenden Durchgangsbereich in die Tasche und das sich gegebenenfalls in dieser Tasche befindliche Ausbringinstruments benetzt,
e) zumindest teilweise Entnahme der ersten Substanz aus der Tasche, gegebenenfalls unter Zuhilfenahme des Ausbringinstruments.
f) gegebenenfalls Auftragen der ersten Substanz auf eine Oberfläche, insbesondere Gewebe, besonders bevorzugt dentales Hartgewebe,
g) gegebenenfalls Öffnen der zweiten Kammer des zweiten Abschnitts durch Abziehen einer Deckfolie,
h) gegebenenfalls zumindest teilweise Entnahme der zweiten Substanz aus der zweiten Kammer,
i) gegebenenfalls Auftragen der zweiten Substanz auf die Stelle, die vorher mit der ersten Substanz benetzt oder in Berührung kam.

Vor dem Aktivieren der Vorrichtung durch Öffnen eines der Kammern bzw. Behältnisse wird üblicherweise der zweite Abschnitt vom ersten Abschnitt der Vorrichtung abgetrennt, um das Applizieren der Substanzen, die sich in den einzelnen Kammern befinden, zu erleichtern.

Die zu applizierenden Substanzen können fließfähig, gegebenenfalls knetbar sein oder auch in Pulverform vorliegen. Vorzugsweise sind die Substanzen polymerisierbar.

Beispiele für polymerisierbare Substanzen umfassen licht- oder radikalisch polymerisierbare Substanzen wie Acrylsäure, Methacrylsäure, Maleinsäure, sowohl in monomerer als auch in polymerer oder vorpolymerisierter Form, sowie Derivate davon.

Fließfähige Substanzen umfassen alle im Dentalbereich gängigen Flüssigkeiten und Gele, wie Ätzmittel, Primer und Bonding-Mittel sowie übliche Lösungsmittel.

Die Lösungsmitteln können gewählt sein aus sowohl dipolar protischen als auch dipolar aprotischen Lösungsmitteln. Beispielhaft seien genannt: Aceton, DMF, DMSO, Alkohole, Wasser.

Alle im Dentalbereich gängigen restaurativen und/oder prothetischen Substanzen wie Composite, Compomere, Ormocere, Glasionomerzemente, Silikatzemente, Phosphatzemente beispielsweise in Pasten oder auch in Pulverform können in die Vorrichtung eingefüllt werden.

Die Substanzen befinden sich vorzugsweise in dem oder den Behältnissen, gegebenenfalls in dem oder den Behältnissen und gleichzeitig in der das oder die Behältnisse enthaltenden Kammer.
- Figur 1: Aufsicht auf die Vorrichtung.
- Figur 2: Längsschnitt durch die Vorrichtung mit einer Kammer, die ein Behältnis umfasst.
- Figur 3: Längsschnitt durch die Vorrichtung mit einer Kammer, die zwei Behältnisse umfasst.
- Figur 4: Aufsicht auf die Vorrichtung mit zwei Kammern.
- Figur 5: Längsschnitt durch die Vorrichtung mit zwei Kammern und einem Behältnis.
- Figur 6: Aufsicht auf die Vorrichtung mit drei Kammern, die auf zwei Abschnitten angeordnet sind
- Figur 7: Längsschnitt durch die Vorrichtung mit zwei Kammern, wobei eine Folie einen peelbaren Außenschichtbereich aufweist.

Die in den Figuren gezeigten Ausführungsbeispiele sind nur beispielhaft. Die einzelnen Ausführungsformen können wahllos miteinander kombiniert werden.

Je nach Anwendung kann es vorteilhaft sein, dass die Vorrichtung immer eine weitere Kammer zur Aufnahme einer knetbaren Substanz umfasst.

Es ist aber auch denkbar, dass die Vorrichtung unabhängig von der Anzahl der Kammern und/oder Behältnisse in den Kammern immer einen zumindest teilweise peelbaren Außenschichtbereich aufweist.

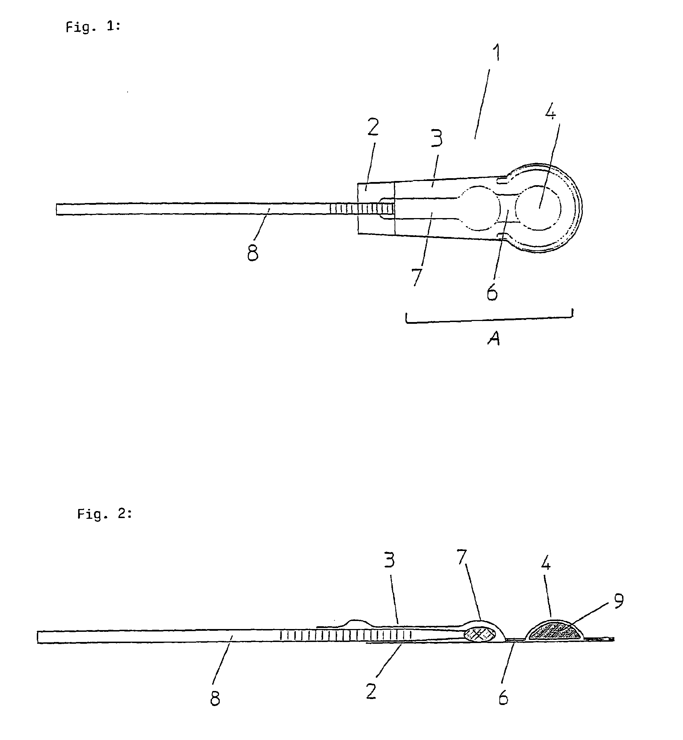

Figur 1 zeigt die erfindungsgemäße Vorrichtung (1) in Aufsicht mit einem Behälter, der aus einer ersten (2) und einer zweiten Folie (3) gebildet wird, einer Kammer (4), einem selektiv zu öffnenden Durchgangsbereich (6) und einer Tasche (7), in der sich ein Ausbringinstrument (8) befindet.

Figur 2 zeigt die erfindungsgemäße Vorrichtung im Längsschnitt mit einem gegebenenfalls eine Substanz enthaltendem Behältnis (9) in der Kammer. Zusätzlich zum Behältnis (9), das eine erste Substanz enthält, kann die Kammer auch eine weitere Substanz enthalten, die das Behältnis umgibt.

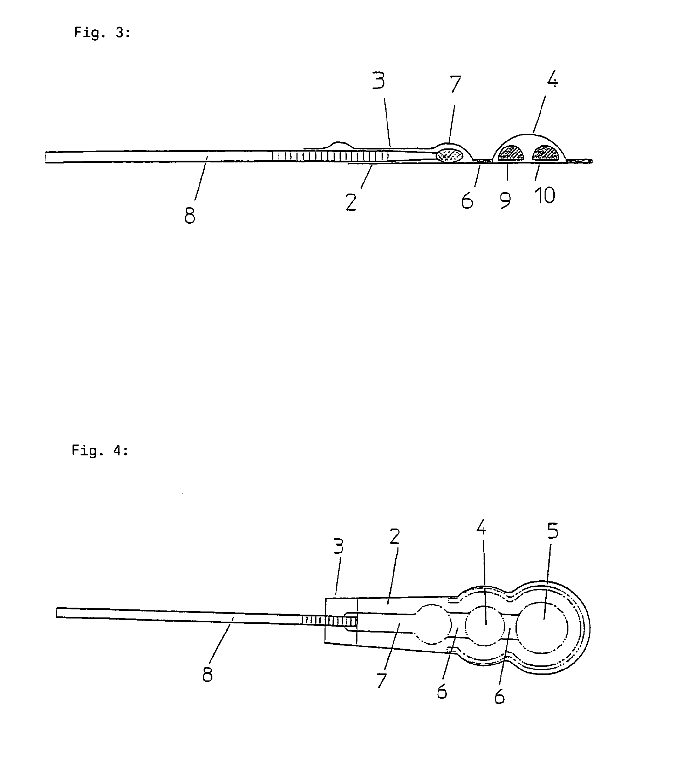

In der in Figur 3 gezeigten Vorrichtung im Längsschnitt enthält die Kammer (4) zwei gegebenenfalls Substanzen enthaltende Behältnisse (9, 10). Zusätzlich zu den Behältnissen (9,10), welche eine erste und eine zweite Substanz enthalten, kann die Kammer auch eine weitere dritte Substanz enthalten, die die Behältnisse umgibt.

Figur 4 zeigt die Vorrichtung wie in Figur 1 mit zwei Kammern (4, 5) in Aufsicht, wobei die Kammern (4, 5) untereinander über einen selektiv zu öffnenden Durchgangsbereich (6) verbunden sind.

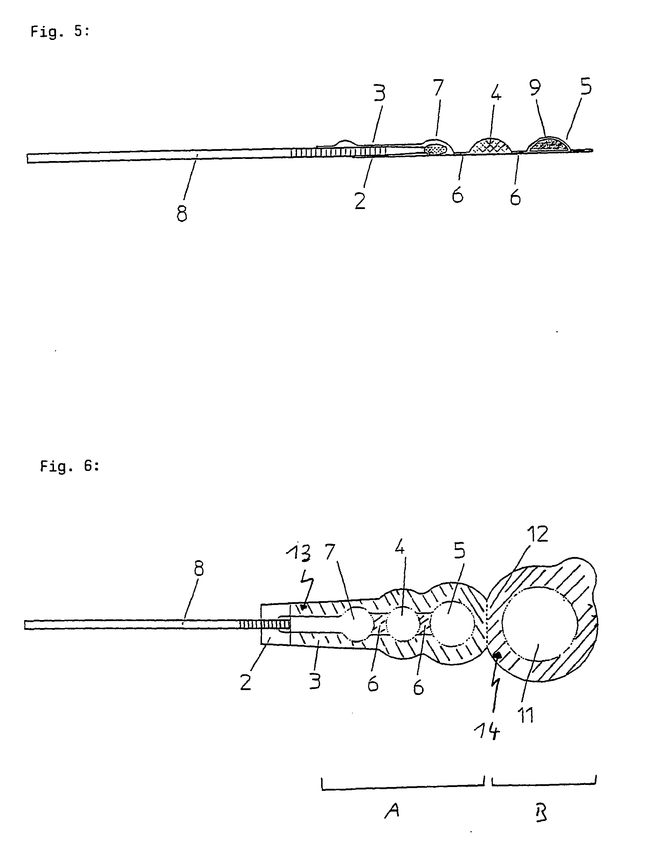

In der in Figur 5 gezeigten Ausführungsform weist die Vorrichtung zwei Kammern (4, 5) auf, wobei die Kammern untereinander über einen selektiv zu öffnenden Durchgangsbereich (6) verbunden sind, und wobei eine der Kammern ein Behältnis (9) enthält.

Figur 6 zeigt eine Ausführungsform mit zwei Kammern (4, 5), die auf einem ersten Abschnitt (A) angeordnet sind und die miteinander über einen selektiv zu öffnenden Durchgangsbereich (6) verbunden sind und einer separaten Kammer (11), die auf einem Abschnitt (B) angeordnet ist, wobei die Kammer (11) mit den anderen Kammern nicht über einen zu öffnenden Bereich verbunden ist. Die separate Kammer (11) ist in der gezeigten Ausführungsform über eine Perforation (12) von der übrigen Vorrichtung abtrennbar ausgebildet. Die Perforation (12) ermöglicht einerseits gegebenenfalls das vollständige Abtrennen der weiteren Kammer (11), andererseits soll sichergestellt werden, dass beim Öffnen der weiteren Kammer (11) durch Abziehen der Deckfolie nicht die gesamte äußere Folie abgezogen wird. Die die Kammern bildenden Folien sind in den Bereichen (13, 14) auf unterschiedliche Weise miteinander verbunden. Während im ersten Abschnitt (13) die Folien miteinander fest versiegelt sind (Schrafur von links nach rechts), sind sie im zweiten Bereich (14) peelbar miteinander versiegelt (Schrafur von rechts nach links).

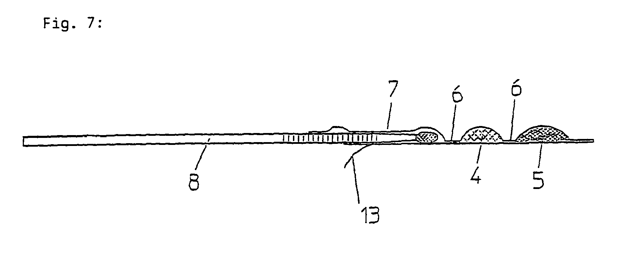

In Figur 7 ist eine Ausführungsform der Vorrichtung im Längsschnitt gezeigt mit zwei Kammern (4, 5), wobei eine der die Vorrichtung bildenden Folien einen peelbaren Außenschichtbereich (13) aufweist.

## Patentansprüche

1. Vorrichtung (1), umfassend eine erste (2) und eine zweite Folie (3), die mindestens eine erste Kammer (4) zur Aufnahme einer ersten Substanz bilden, und eine von der Kammer getrennte Tasche (7) zur Entnahme der ersten Substanz, wobei die Trennung zwischen der Tasche (7) und der ersten Kammer (4) einen selektiv zu öffnenden Durchgangsbereich (6) aufweist, **dadurch gekennzeichnet daß** (4) die erste Kammer (4) mindestens ein Behältnis (9) enthält, das sich durch Einwirkung von Druck auf die die Kammer bildenden Folien öffnen lässt.

2. Vorrichtung nach Anspruch 1, die eine zweite Kammer (5) zur Aufnahme einer zweiten Substanz aufweist.

3. Vorrichtung nach einem der vorhergehenden Ansprüche, wobei die Trennung zwischen der zweiten Kammer (5) und der ersten Kammer (4) und/oder der Tasche (7) einen selektiv zu öffnenden Durchgangsbereich (6) aufweist.

4. Vorrichtung nach einem der vorhergehenden Ansprüche, wobei sich in der ersten und/oder zweiten Kammer (4, 5) ein, zwei oder mehrere Behältnisse (9, 10) befinden.

5. Vorrichtung nach einem der vorhergehenden Ansprüche, wobei die Tasche (7) zur Aufnahme eines Ausbringinstruments (8) ausgebildet ist.

6. Vorrichtung nach einem der vorhergehenden Ansprüche, wobei ein Ausbringinstrument (8) in der Tasche (7) aufgenommen ist, das einen aus dieser herausragenden Abschnitt aufweist.

7. Vorrichtung nach einem der vorhergehenden Ansprüche, wobei eine der Folien einen peelbaren Außenschichtbereich (13) und einen Innenschichtbereich aufweist.

8. Vorrichtung nach einem der vorhergehenden Ansprüche mit einem zweiten Abschnitt (8), der eine weitere Kammer (11) zur Aufnahme einer weiteren Substanz aufweist.

9. Vorrichtung nach Anspruch 8, wobei die Trennung zwischen der weiteren Kammer (11) und den anderen Kammern keinen selektiv zu öffnenden Durchgangsbereich aufweist.

10. Vorrichtung nach einem der Ansprüche 8 und 9, wobei sich die weitere Kammer (11) durch eine separat peelbare Folie (14) öffnen und gegebenenfalls wieder verschließen lässt.

11. Vorrichtung nach einem der vorhergehenden Ansprüche, wobei zumindest ein Behältnis (9) und gegebenenfalls die erste Kammer (4) selbst eine Substanz enthalten.

12. Verwendung der Vorrichtung (1) nach einem der vorhergehenden Ansprüche zur Lagerung und Ausbringung mindestens einer fließfähigen Substanz und gegebenenfalls einer knetbaren Substanz.

13. Verfahren zum Ausbringen einer Substanz, umfassend die Schritte: a) Bereitstellen einer Vorrichtung (1) nach Anspruch 11, b) Ausüben von Druck auf die erste Kammer (4) des ersten Abschnitts (A), wodurch das sich in dieser Kammer befindliche Behältnis öffnet, c) Mischen der aus dem Behältnis (9) austretenden ersten Substanz gemäß Schritt b) mit einer zweiten Substanz, die sich entweder in der erste Kammer (4) außerhalb des Behältnisses (9) oder in einer zweiten Kammer (5) befindet die über einen selektiv zu öffnenden Durchgangsbereich (6) mit der ersten Kammer (4) verbindbar ist, d) Überführen der Mischung aus Schritt c) über den selektiv zu öffnenden Durchgangsbereich (6) in die Tasche (7), d) zumindest teilweise Entnahme der ersten Substanz aus der Tasche (7).

14. Verfahren nach Anspruch 13, wobei es sich bei der ersten und zweiten Substanz um Komponenten eines Zahnoberflächenbehandlungsmittels handelt.

## Claims

1. Device (1) comprising a first foil (2) and a second foil (3) which form at least one first chamber (4) for receiving a first substance, and a pouch (7) which is separate from the chamber and is used to receive the first substance, the separation between the pouch (7) and the first chamber (4) having a passage area (6) that can be selectively opened, **characterized in that** the first chamber (4) containing at least one receptacle (9) which can be opened by applying pressure to the foils forming the chamber.

2. Device according to Claim 1, said device having a second chamber (5) for receiving a second substance.

3. Device according to one of the preceding claims, in which the separation between the second chamber (5) and the first chamber (4) and/or the pouch (7) has a passage area (6) that can be selectively opened.

4. Device according to one of the preceding claims, in which one, two or more receptacles (9, 10) are located in the first and/or second chamber (4, 5).

5. Device according to one of the preceding claims, in which the pouch (7) is designed to receive a dispensing instrument (8).

6. Device according to one of the preceding claims, in which a dispensing instrument (8) is received in the pouch (7) and has a section protruding from the latter.

7. Device according to one of the preceding claims, in which one of the foils has a peelable outer layer area (13) and an inner layer area.

8. Device according to one of the preceding claims, said device having a second portion (B) which has a further chamber (11) for receiving a further substance.

9. Device according to Claim 8, in which the separation between the further chamber (11) and the other chambers has no passage area that can be selectively opened.

10. Device according to either of Claims 8 and 9, in which the further chamber (11) can be opened by means of a separately peelable foil (14) and, if appropriate, can be closed again.

11. Device according to one of the preceding claims, in which at least one receptacle (9) and if appropriate the first chamber (4) itself contain a substance.

12. Use of device (1) according to one of the preceding claims, for storing and dispensing at least one free-flowing substance and, if appropriate, a kneadable substance.

13. Method for dispensing a substance, which method comprises the following steps: a) provision of a device (1) according to Claim 11, b) application of pressure to the first chamber (4) of the first portion (A), by which means the receptacle located in this chamber opens, c) mixing the first substance, emerging from the receptacle (9), in accordance with step b), with a second substance which is located either in the first chamber (4) outside the receptacle (9) or in a second chamber (5) which can be connected to the first chamber (4) via a passage area (6) that can be selectively opened, d) transferring the mixture from step c) into the pouch (7) via the passage area (6) that can be selectively opened, d) at least partial removal of the first substance from the pouch (7).

14. Method according to Claim 13, in which the first and second substances are components of an agent for treating the tooth surface.

## Revendications

1. Dispositif (1) comprenant une première feuille (2) et une seconde feuille (3) qui forment au moins une première chambre (4) pour recevoir une première substance et une poche (7) séparée de la chambre pour retirer la première substance, dans lequel la séparation entre la poche (7) et la première chambre (4) présente une zone de passage à ouvrir de manière sélective (6), **caractérisé en ce que** la première chambre (4) contient au moins un récipient (9) que l'on peut ouvrir sous l'action de la pression sur les feuilles formant la chambre.

2. Dispositif selon la revendication 1 qui présente une seconde chambre (5) pour recevoir une seconde substance.

3. Dispositif selon l'une quelconque des revendications précédentes dans lequel la séparation entre la seconde chambre (5) et la première chambre (4) et/ou la poche (7) présente une zone de passage à ouvrir de manière sélective (6).

4. Dispositif selon l'une quelconque des revendications précédentes dans lequel un, deux récipients ou plus (9, 10) se trouvent dans la première et/ou la seconde chambre (4, 5).

5. Dispositif selon l'une quelconque des revendications précédentes dans lequel est réalisée la poche (7) pour recevoir l'instrument d'extraction (8).

6. Dispositif selon l'une quelconque des revendications précédentes dans lequel un instrument d'extraction (8) est logé dans la poche (7), instrument qui présente une section ressortant de la poche.

7. Dispositif selon l'une quelconque des revendications précédentes dans lequel une des feuilles présente une zone de couche externe détachable (13) et une zone de couche interne.

8. Dispositif selon l'une quelconque des revendications précédentes avec une seconde section (B) qui présente une autre chambre (11) pour recevoir une autre substance.

9. Dispositif selon la revendication 8, dans lequel la séparation entre la chambre supplémentaire (11) et les autres chambres ne présente pas de zone de passage à ouvrir de manière sélective.

10. Dispositif selon la revendication 8 ou 9 dans lequel on peut ouvrir et éventuellement refermer l'autre chambre (11) par une feuille détachable séparément (14).

11. Dispositif selon l'une quelconque des revendications précédentes dans lequel au moins un récipient (9) et éventuellement la première chambre (4) contiennent eux-même une substance.

12. Utilisation du dispositif (1) selon l'une quelconque des revendications précédentes pour stocker et extraire au moins une substance fluide et éventuellement une substance pétrissable.

13. Procédé pour extraire une substance qui comprend les étapes suivantes : a) préparation d'un dispositif (1) selon la revendication 11, b) exercice de pression sur la première chambre (4) de la première section (A) ce qui entraîne l'ouverture du récipient se trouvant dans cette chambre, c) mélange de la substance sortant du récipient (9) selon l'étape b) à une seconde substance qui se trouve soit dans la première chambre (4) en dehors du récipient (9) soit dans une seconde chambre (5) qui peut être raccordée à la première chambre (4) via une zone de passage à ouvrir de manière sélective (6), d) transfert du mélange de l'étape c) via la zone de passage à ouvrir de manière sélective (6) dans la poche (7), d) retrait au moins partiel de la première substance de la poche (7).

14. Procédé selon la revendication 13 dans lequel les première et seconde substances sont des composants d'un agent de traitement de la surface des dents.
